# EUROPÄISCHE PATENTSCHRIFT

(11) **EP 0 356 569 B1**
(45) Veröffentlichungstag und Bekanntmachung des Hinweises auf die Patenterteilung: **31.03.1993**
(21) Anmeldenummer: 88114372.1
(22) Anmeldetag: 02.09.1988
(51) Int. Cl.: G01N 35/02

(54) **Verfahren zum Analysieren von flüssigen Proben in Reaktionsküvetten und Analysengerät zur Durchführung dieses Verfahrens**
Method for analysing liquid samples in reaction cuvettes, and analysing apparatus for carrying out the method
Méthode d'analyse d'échantillons liquides dans des cuvettes et appareil d'analyse pour la mise en oeuvre de ladite méthode

(43) Veröffentlichungstag der Anmeldung: 07.03.1990
(73) Patentinhaber: EPPENDORF-NETHELER-HINZ GMBH, D-22339 Hamburg (DE)
(72) Erfinder: Waschi-Abel, Hans-Peter, Dr., D-2000 Hamburg 65 (DE); Grazianski, Thomas, Dipl.-Ing., D-2000 Hamburg 65 (DE)
(74) Vertreter: Hauck, Hans, Dipl.-Ing.

(56) Entgegenhaltungen:
- EP-A- 0 043 079
- EP-A- 0 073 579
- EP-A- 0 078 948
- WO-A-88/00704
- DE-A- 3 134 005

## Beschreibung

Die Erfindung betrifft ein Verfahren zum Analysieren von flüssigen Proben in Reaktionsküvetten gemäß dem Oberbegriff von Anspruch 1.

Ferner bezieht sich die Erfindung auf ein Analysengerät zur Durchführung des Verfahrens nach dem Oberbegriff des Anspruchs 5.

Bekannte Verfahren und Geräte lassen eine Analyse von Flüssigkeitsproben nur nach einem starren Schema zu, so daß die Einsatzfähigkeit beschränkt ist, wenn nicht ein außerordentlich hoher Aufwand getrieben wird. Dieser Aufwand ist schon gerätemäßig sehr groß und erfordert nicht nur eine Vervielfachung von Einzelvorrichtungen, sondern auch einen Steueraufwand, der fehleranfällig ist.

Aus der Europäischen Patentschrift 0 078 948 ist bekannt, Reaktionsgefäße in einer geschlossenen Schleife synchron vorzurücken und in Ruhestellungen Proben zu einem Reaktionsgefäß und gleichzeitig ein Reagenz zu einem anderen Reaktionsgefäß hinzuzufügen, wobei das Vorrücken derart erfolgt, daß die geschlossene Schleife von Behältern sich durch ein erstes ganzzahliges Vielfaches des Abstandes zwischen benachbarten Reaktionsbehältern bis ungefähr zu einer Umdrehung bewegt, wobei jedoch nicht genau eine Umdrehung erreicht wird, und während des Vorrückens eine dem ganzzahligen Vielfachen entsprechende Anzahl von Reaktionsbehältern durch den Lichtweg eines Photometers hindurchtritt. Dieses ist ein starres und nicht anpassungsfähiges System.

In diesem muß die geschlossene Schleife von Reaktionsbehältern mindestens zweimal um eine vorbestimmte Strecke vorgerückt werden, bis die ungefähr eine Umdrehung erzielt wird, wobei diese Strecke ein zweites ganzzahliges Vielfaches des Abstandes zwischen benachbarten Reaktionsbehältern darstellt. Daraus ergibt sich, daß eine Bewegung in einer Richtung stattfindet und daß dabei auch noch ein bestimmtes Verhältnis eingehalten werden muß.

Dieses verfolgt den Zweck, daß die Behandlungskapazität ohne Beeinträchtigung der Meßgenauigkeit erhöht werden kann und ferner daß auch ein Analysierverfahren und eine -vorrichtung eingesetzt werden können, in denen hohe Meßgenauigkeit durch Gewährleistung einer ausreichenden Lichteinwirkungszeit für jedes Gefäß sichergestellt ist.

Dieses wird allerdings bei einem in Kauf zu nehmenden Aufwand letzten Endes doch dadurch eingeschränkt, daß nur bestimmte Analysierverfahren durchgeführt werden können.

Aus der EP-A- 0 041 378 ist ein automatisches Analyseninstrument bekannt. Dieses arbeitet mit den oben erwähnten Einrichtungen und Vorrichtungen, auch mit Übertragern, wobei Reaktionsbehälter an einer vorgegebenen Abgabeposition beschickt werden, aber auch mehrere Reagenz-Pipettiermechanismen vorhanden sind, deren Pipettierröhrchen hin- und herbewegbar sind, um eine Funktion durchzuführen oder gereinigt zu werden. Hierbei soll aber die Antriebseinrichtung zur Bewegung eines Pipettierröhrchens so ausgeführt sein, daß sie das Reagenz-Pipettierröhrchen entsprechend der gewünschten Analyse längs einer Bahn in der Reagenzien-Vorratseinrichtung zu einem ausgewählten der Reagenzgefäße bewegt. In diesem bekannten Analyseninstrument wird aber ein Träger für Funktionsküvetten in einer Richtung bewegt, so daß die Anpassungsfähigkeit gering ist.

Aus der EP-A- 0 043 079 ist ein Analysengerät, insbesondere für biologische Flüssigkeitsproben bekannt. In diesem ist ein Analysenrotor als Drehtisch mit mehreren Küvetten in gleichem Abstand in kreisförmiger Anordnung vorgesehen. Eine Antriebsvorrichtung sorgt für eine schrittweise Drehung des Rotors in Drehschritten, die einer ganzen Anzahl von Behälterabschnitten entsprechen. Diese Drehung liegt in einer Richtung. Eine Probenzugabevorrichtung ist einer bestimmten Stellung des Drehtisches zugeordnet. Dabei sind diese Probenzugabevorrichtungen und wenigstens eine erste Reaganzzugabevorrichtung und auch eine Meßeinrichtung an verschiedenen Positionen um den Umfang des Rotors angeordnet. Hierbei ist die Probenzugabevorrichtung so ausgeführt, daß eine Flüssigkeitsprobe einer Küvette zugeführt werden kann, wenn sie vom Rotor in eine bestimmte Stellung gebracht ist.

Die Reagenzzuführungseinrichtung arbeitet mit vielen stationären Reagenzvorratsbehältern zusammen und entnimmt nach einem Plan dann eine bestimmte Reagenz, wobei die Übergabe auch dann erfolgt, wenn die Küvette von dem Rotor in eine bestimmte Stellung zur Meßeinrichtung bewegt wird. Das wird auch für die Erfindung einbezogen.

In der bekannten Ausführung sind Steuereinrichtungen vorgesehen, mittels derer die Probenzufuhreinrichtungen derart gesteuert ist, daß sie eine flüssige Probe wahlweise von jedem beliebigen aus der Mehrzahl von Probebehältern dem Reaktionsbehälter zuführen kann. Dafür wird aber die Reagenzzugabevorrichtung so gesteuert, daß sie die Reagenzflüssigkeit wahlweise von jedem beliebigen der diesbezüglichen Vorratsbehälter einer bestimmten Küvette zuführen kann, wenn die Küvette vom Reaktionsrotor in eine bestimmte Stellung relativ zu der Reagenzzugabevorrichtung bewegt wird und dann der Antrieb des Reaktionsrotors und auch die Meßeinrichtung so gesteuert werden, daß jede Reaktionsküvette durch eine Mehrzahl von vollständigen Umdrehungen des Drehtisches bewegt wird, bevor die in dem Reaktionsbehälter befindliche Flüssigkeit der analytischen Messung durch die Meßeinrichtung unterworfen wird, und zwar so, daß jeder Reaktionsbehälter während dieser Mehrzahl von Umdrehungen des Drehtisches mindestens zweimal in eine solche Position relativ zu der Probenzugabestation bzw. der Reagenzzugabestation gebracht wird.

Auch wenn in diesem bekannten Gerät Probenflüssigkeit bzw. Reagenzflüssigkeit jeder verschiedenen Reaktionsküvette zumindest zu zwei verschiedenen Zeitpunkten zugegeben werden kann, unterliegt diese Ausführung einem enormen Aufwand und vor allem aber einem insofern nur starren Programm, als die Zugabe immer nur in bestimmten Zeittakten während der Vorwärtsbewegung der Reaktionsküvetten stattfindet.

Aus der DE-C- 31 34 005 ist ein Analysen-Automat mit einem kreisförmig gestalteten Reaktionstisch, Proben- und Reagenzzuführungseinrichtungen und einer optischen Meßeinrichtung bekannt, wobei aber besondere Abläufe zwischen dem Beginn der Messung des Inhalts eines Reaktionsbehälters und dem Beginn der Messung des Inhalts eines anderen Reaktionsbehälters, der an der Stelle unmittelbar vor der optischen Meßeinrichtung angelangt ist, erfolgen: Leere Reaktionsküvetten werden durch Bewegung des Rotors wieder an die Zuführungsstelle gebracht und gefüllt, worauf eine Weiterbewegung zu einer Stelle zur Zugabe eines zweiten Reagenz erfolgt und dann der Reaktionsbehälter wieder durch die optische Meßeinrichtung geführt wird. Hierbei findet eine ständige Weiterbewegung in einer Richtung statt.

Aus der EP-A- 0 073 579 ist ein Analyse-Gerät mit einem einen Rotor bildenden Küvettenteller bekannt, bei dem eine optische Meßeinrichtung zu diesem Rotor lokalisiert ist und der Antrieb wenigstens eine ausgewählte Küvette wiederholt positioniert. Der Drehantrieb um die Drehachse des sogenannten Küvettentellers ist für eine bi-direktionale Drehung vorgesehen und Steuerungen sorgen dafür, daß der als Küvettenteller ausgeführte Rotor eine ausgewählte Küvette in bestimmter Weise an einer ersten Station in einer ersten Richtung lokalisiert, wobei auch weiterhin der Antrieb zum Drehen des Küvettentellers des Rotors in einer zweiten Richtung gesteuert werden kann, bevor der Rotor die ausgewählte Küvette wieder in der ersten Station repositioniert, worauf eine Drehung in der ersten Richtung erfolgt.

Hier findet schon eine Hin- und Herbewegung statt, wobei eine Behandlungsstation zum Rotor und eine vorbestimmte Anzahl von n-Winkelpositionen des Rotors vorhanden sind und eine zweite Behandlungsstation um eine vorbestimmte Anzahl von Winkelpositionen des Rotors lokalisiert ist, von der ersten Station entfernt, und der Antrieb des Rotors diesen zunächst um n-Winkelpositionen in einer ersten Richtung und dann um eine Anzahl von Winkelpositionen kleiner als n in einer zweiten Richtung dreht.

Diese Drehung in der zweiten Richtung hat dabei den Zweck, Positionierfehler in den Antriebsmitteln auszuschließen, um die Auswertung von Messungen zu optimieren.

Dieses bekannte Gerät hat in der zweiten Station eine Reagenzabgabevorrichtung, jedoch mit einer folgenden dritten Funktionsstation mit einer zusätzlichen Probenaufnahmevorrichtung. Weiterhin werden photometrische Messungen an einer Flüssigkeit in einer ausgewählten Küvette eines drehbaren Trägers, insbesondere Rotor einbezogen, und zwar mit einer Vielzahl von Küvetten, die mit einem Sichtdurchgang zur Vornahme von Ablesungen bei einer photometrischen Meßstation vorgesehen sind. Dabei wird der Reaktionsrotor gedreht, um eine ausgewählte Küvette an der optischen Meßeinrichtung zu lokalisieren, und der Reaktionsrotor weitergedreht, damit eine Reaktionsküvette repositioniert werden kann und eine nochmalige photometrische Messung der Flüssigkeit in der ausgewählten Küvette stattfindet. Dieses stellt bereits eine besondere Ausführung des Antriebs vor. Einbezogen wird dabei aber eine Drehung des Reaktionsrotors während bestimmter Schritte in einer Richtung und während eines anderen Schrittes in einer entgegengesetzten Richtung.

Dabei ist für die Weiterdrehung immer ein bestimmtes Schema enthalten. Dieses Schema beschränkt den Analysenbereich entsprechend, weil es sich bei dieser Ausführung lediglich um die Einhaltung einer genauen Positionierung an bestimmten Stationen handelt.

Der Erfindung liegt die Aufgabe zugrunde, ein Verfahren und ein Gerät gemäß obigen Angaben dahingehend zu verbessern und gegenüber den Ausführungen zum Stand der Technik so auszugestalten, daß ein vollselektives Analysengerät geschaffen wird, welches nicht nur einem bestimmten festgelegten Programm mit einer im wesentlichen festgelegten Bewegungsrichtung der Reaktionsküvetten entspricht, sondern die Möglichkeit vorbehält, daß bei einer gleichzeitigen Bearbeitung mehrerer Küvetten wahlfreie Zugriffe hinsichtlich Reagenzien- und Probenübernahme und - übertragung möglich werden.

Diese Aufgabe wird durch das Verfahren gemäß dem kennzeichnenden Teil des Anspruchs 1 gelöst.

Dieses Verfahren ermöglicht eine rationelle Auslegung der Steuerungsteile, letzten Endes aber auch ein Analysengerät mit einer einfachen gerätemäßigen Ausstattung und einer optimalen Variationsfähigkeit.

Dabei liegt eine bevorzugte Ausführungsform auch darin, daß die Weiterbewegung des Reaktionsrotors auf dem kürzesten Weg zur nächsten Arbeitsposition in Form einer kontinuierlichen Bewegung durchgeführt wird.

Eine besonders vorteilhafte Ausgestaltung des Verfahrens liegt darin, daß die wenigstens eine Übertragungsvorrichtung in ausgewählten Haltepositionen in bezug zu entsprechenden Arbeitspositionen mehrere Funktionen im Sinne einer Zuführung, Entnahme und/oder Übertragung zu, von und/oder zwischen verschiedenen Reaktionsküvetten oder -gefäßen durchführt.

Dieses dient im Sinne obiger Angaben zur Verwirklichung des Vorganges in gerätemäßig einfachster und zeitmäßig kürzester Weise. Insbesondere erfolgt eine Reaktionszugabe in Drehbewegung des Reaktionsrotors vor der Meßeinrichtung und die Probenzugabe hinter der Meßeinrichtung und nach der Probenzugabe und insbesondere einem Mischvorgang ist eine Umsteuerung des Reaktionsrotors in der Drehrichtung vorgesehen, um den Zustand in der Reaktionsküvette zu messen, worauf sich der Reaktionsrotor in der ersten Antriebsrichtung weiterbewegen kann, aber für danach eingebrachte Reaktionsküvetten eine weitere Rückbewegung fortlaufend schrittweise erfolgt.

Eine vorteilhafte Ausführungsform eine Arbeitsposition mit einer Übertragungsvorrichtung für die Übertragung mit wenigstens einem Reagenz versehene Probe in eine zusätzliche Bearbeitungseinrichtung außerhalb der Arbeitseinrichtungen am Reaktionsrotor.

Das Analysengerät gemäß obigen Angaben zeichnet sich durch den kennzeichnenden Teil des Anspruchs 5 aus.

Dieses bezieht ein, daß in jeder Arbeitsstellung Arbeits takte bestimmter Dauer vorgesehen sind, in welchen verschiedene Reaktionsküvetten in der gleichen und verschiedenen Arbeitspositionen einer Behandlung unterworfen sind, wobei innerhalb des Arbeitstaktes je nach der Positionsstellung Arbeitsvorgänge besonderer Dauer vorgesehen sind. Durch diese Ausführung können viele Proben in kürzester Zeit unter geringstmöglichem gerätemäßigen Aufwand bearbeitet werden.

In letzterem liegt ein erheblicher Vorteil der Erfindung, weil eine Anpassungsfähigkeit an verschiedene Analysenmethoden einbezogen wird, wobei durch die besondere erfindungsgemäße Ausführung die Anpassungsfähigkeit im Sinne einer Vermehrung möglicher Varianten in der Analysendurchführung nicht zu einer vergleichbaren Vermehrung des gerätemäßigen Aufwandes führt.

In obigem Sinne wird bevorzugt, daß in jeder Halteposition Analysentakte bestimmter Dauer vorgesehen sind, in welchen verschiedenen Reaktionsküvetten an verschiedenen Arbeitspositionen einer Behandlung unterworfen sind, wobei innerhalb des Analysentaktes je nach der Arbeitsposition Arbeitsvorgänge unterschiedlicher Dauer vorgesehen sind.

Gemäß einer weiteren vorteilhaften Ausgestaltung sind dem Reaktionsrotor außerhalb unmittelbar zugeordneter Arbeitsvorrichtungen äußere Module als Bearbeitungsvorrichtungen zugeordnet und wenigstens eine Meßlösungsübertrager ist zur Übertragung in ein äußeres Modul vorgesehen. Dieses erhöht die Variationsmöglichkeit und Vervielfältigung von Verfahrensschritten in einzelnen Analysenmethoden, ohne daß dadurch der geräte- und platzmäßige Aufwand wesentlich vergrößert werden muß.

Unter obigen Gesichtspunkten liegt eine zweckmäßige Ausgestaltung darin, daß eine Aufnahmevorrichtung Leseeinrichtungen für Belegungstabellen aufweist und Aufzeichnungs- und Sendespuren einer Steuergruppe zur Aufnahme von Signalen aus der Aufnahmevorrichtung vorgesehen sind und die Aufzeichnungs- und Sendespuren für mechanische Wiedergabe in Form von Lochbändern, für elektronische Wiedergabe im Zusammenhang mit Magnetbändern etc. ausgeführt sind und jeder Aufzeichnungs- und Sendespur ein Empfänger für Signale aus der Aufnahmevorrichtung und ein Sender zur Weitergabe von Signalen in eine Taktsteuerung nachgeordnet sind, welche Taktsteuerung eine Schaltungseinrichtung ist, die die aufgenommenen Signale auswertet und an verschiedene Ausgänge zu Aggregaten für den Antrieb des Gerätes ausgibt. Hierdurch wird eine einfache Steuervorrichtung geschaffen.

Zweckmäßig ist am Reaktionsrotor ein Gehäuse mit Arbeitsvorrichtungen für Spülen, Füllen, Absaugen und Trocknen angeordnet. Dieses ist eine günstige räumliche Ausgestaltung, deren Einsatz auch noch dadurch verbessert werden kann, daß eine Antriebssteuerung für den Reaktionsrotor mit Arbeitsschritten verschiedener Dauer in einem Analysentakt vorgesehen ist. Insofern schafft die Erfindung eine Vielzahl von Anpassungsmöglichkeiten.

Dabei sind jeweils verschiedene Küvetten um den Umfang des Reaktionsrotors einbezogen, sowie eine Messung einer ersten Gruppe von Reaktionsküvetten und einer zweiten Gruppe von Reaktionsküvetten und ein Transport von Reaktionsküvetten zur optischen Meßeinrichtung zur Nachmessung und weiterhin eines Reaktionsküvetten-Leerwertes sowie ein weiterer Transport einer Reaktionsküvette zur Probenzugabe- und Mischstation vorgesehen.

Weitere vorteilhafte Ausgestaltungen ergeben sich aus der folgenden Beschreibung in Verbindung mit der beigefügten Zeichnung. In der Zeichnung zeigen:
- Fig. 1: eine perspektivische Vorderansicht des Gerätes zur Erläuterung der An- und Zuordnung der Hauptteile,
- Fig. 2: eine Draufsicht auf wesentliche Funktionsteile in mehr ins Einzelne gehender Darstellung als in Fig. 1,
- Fig. 3 a und Fig. 3 b: eine Funktionsdarstellung zur Erläuterung des Funktionsablaufs in Verbindung mit Analysentakten, dargestellt anhand einzelner Reaktionsküvetten auch bezüglich zugeordneter Rotorpositionen, wobei die Fig. 3 a die linke Seite und die Fig. 3 b die rechte Seite einer gemeinsamen Figur bilden, die im folgenden insgesamt als Fig. 3 bezeichnet wird.
- Fig. 4: ein Ersatzschaltbild für den Ablauf eines Analysentaktes unter Erläuterung gleichbleibender Vorgänge, jeweils auch in Anlehnung an die Darstellung der Funktionsdarstellung in Fig. 3,
- Fig. 5: ein Schaubild für die Steuerung eines erfindungsgemäßen Gerätes unter gleichzeitiger Erläuterung der Grundlagen einer Steuervorrichtung für dieses Gerät,
- Fig. 6: ein weitergehendes Blockschaltbild für die Steuerung des Gerätes in Anlehnung an die Darstellung in Fig. 5.

In allen Figuren sind gleiche Teile mit gleichen Bezugszeichen bezeichnet.

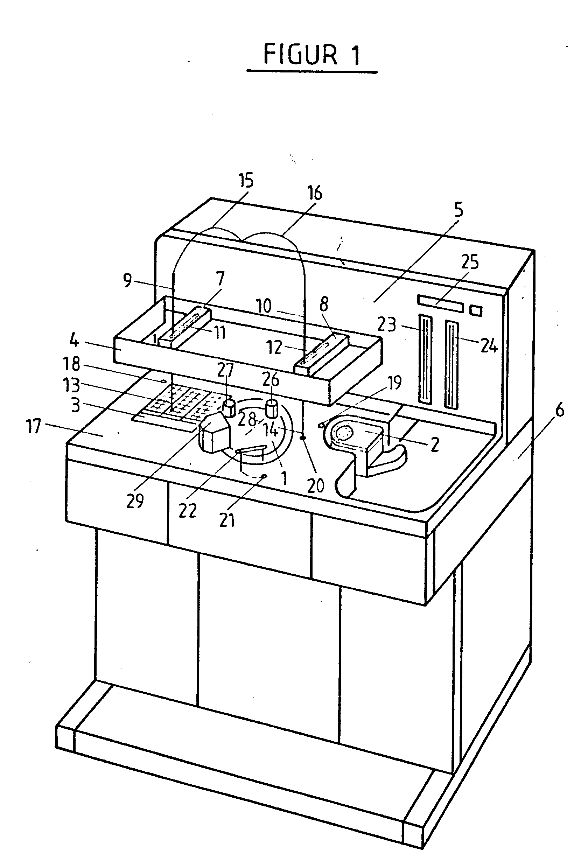

In Fig. 1 ist das Gerät als Pult gezeigt. Erkennbar ist ein weitgehend abgedeckter Reaktionsrotor 1, dem an einer Seite eine Bereitstellungsanordnung 2 für Proben und an der anderen Seite eine Reagenzeinheit 3 zugeordnet sind. In letzterer ist entsprechend den gezeigten Öffnungen eine Vielzahl von Reagenzien in verschiedenen Vorratsgefäßen untergebracht, die je nach ihrer Eigenschaft kolonnenweise aufgegliedert sein können.

Eine Übertragungsvorrichtung 4, welche am Oberteil 5 des Pultes 6 angeordnet ist, überspannt die Reagenzeinheit 3, den Reaktionsrotor 1 und die Bereitstellungsanordnung 2 für Proben, so daß an jeder Stelle dieser drei Gruppen entnommen und an jeder Stelle dieser drei Gruppen, insbesondere aber in diesem Fall des Reaktionsrotors 1, abgegeben werden kann. Zu diesem Zweck sind in der Übertragungsvorrichtung 4 zwei über die Einheiten 1, 2, 3 hinweg und hin-und herbewegbare Träger 7, 8 angeordnet, in denen quer zur Bewegungsrichtung der Träger Beschickungsröhrchen 9, 10 in Schlitzen 11, 12 bewegbar sind. Die Schlitze haben eine Länge derart, daß sie die gesamte Erstreckung der Einheiten 1, 2, 3 in dieser Richtung erfassen können. In den Trägern 7, 8 sind dabei zugleich Antriebsvorrichtungen für Kanülen 13, 14 angeordnet, die in die Einheiten 1 bis 3 und zusätzliche Teile herausfahrbar und zurückziehbar sind. Die Beschickungsröhrchen 9, 10 sind an ihren oberen Enden mittels Leitungen 15, 16 mit Pumpen oder Saugeinrichtungen bzw. Druckeinrichtungen innerhalb des Gehäuses verbunden, um die jeweilige Funktion durchzuführen. Hierbei sind beispielsweise der Träger 7 zur Übertragung eines ersten Reagenz und der Träger 8 zur Übertragung sowohl der Probe und gegebenenfalls nach Notwendigkeit einer weiteren Reagenz vorgesehen.

In der Deckfläche 17 des Pultes 6 sind außerdem der Eingang 18 für eine Spülstation für das System mit dem Beschickungsröhrchen 9 und außerdem ein Eingang 19 für eine Spülstation für das System mit dem Beschickungsröhrchen 10 und ferner ein Einfüllstutzen 20 für ein Jonometer angeordnet, ferner eine Eingangsöffnung 21 für ein sogenanntes optionales Modul, d.h. Arbeitsvorrichtungen, die außerhalb des direkten Anschlusses an dem Reaktionsrotor 1 angeordnet sind. Für diese Eingangsöffnung ist ein besonderer Meßlösungsübertrager 22 vorgesehen, der zwischen einer Stellung auf der Bewegungsbahn des Reaktionsrotors 1 im Bereich der Reaktionsküvetten und einer zweiten Stellung im Bereich des Meßeinganges 21 einstellbar ist.

Für ein Eingabegerät befindet sich in der Rückwand oder in einer Seitenwand des Gehäuses ein nicht dargestellter Anschluß. Dieses Eingabegerät kann eine Tastatur aufweisen oder aber auch einen Einsatz für Bänder, auf denen die Eingangsangaben gespeichert sind.

Weiterhin sind am Oberteil 5 des Pultes Anzeigen und/oder Griffe für eine verstellbare Dosiereinrichtung 23 für ein erstes Reagenz und eine verstellbare Dosiereinrichtung 24 für die Probe und/oder ein zweites Reagenz sowie wenigstens ein Anzeigefeld 25 angeordnet, das entweder Bedienungshinweise oder Ergebnisse anzeigt.

Am Reaktionsrotor 1 sind zwei hochragende Gehäuse 26 und 27 angeordnet, die jweils Aggregate für Mischvorrichtungen für den Inhalt von Reaktionsküvetten aufweisen und insofern ausfahrbare und zurückziehbare Rührelemente, Luftdruckzuführungen oder dergleichen besitzen.

Hierzu wird bemerkt, daß bezüglich des Reaktionsrotors 1 entsprechend einer nach hinten gerichteten Linie 28 innerhalb des Pultes eine optische Meßeinrichtung angeordnet ist, die bezüglich eines Drehschrittes des Reaktionsrotors entgegen dem Uhrzeigersinn neben der Anordnung der Mischeinrichtung im Gehäuse 26 liegt.

Ein weiteres Gehäuse 29 enthält Arbeitseinrichtungen für das Spülen, Füllen mit Wasser, Absaugen und Trocknen für Reaktionsküvetten.

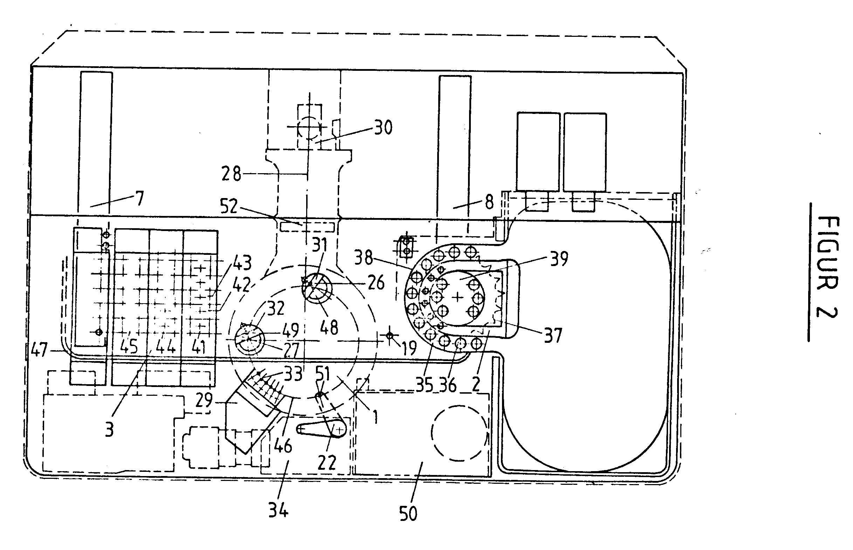

Die Fig. 2 zeigt anhand einer Funktionsskizze die entsprechenden Teile mit größerer Deutlichkeit, wobei in der Draufsicht ein Übertragerarm angeordnet sein könnte, wie er beispielsweise nach Fig. 1 den Trägern 7 und 8 in einer anderen Ausgestaltung entspricht.

Deutlicher erkennbar ist die Anordnung der optischen Meßeinrichtung 30 entsprechend der Linie 28. Dabei ist auch erkennbar, daß die Mischeinrichtung 31 in dem Gehäuse 26 neben der Linie 28 als Achse der optischen Meßeinrichtung 30 angeordnet ist, wobei der Abstand einem Bewegungsschritt bezüglich der Bewegung des Reaktionsrotors 1 entspricht.

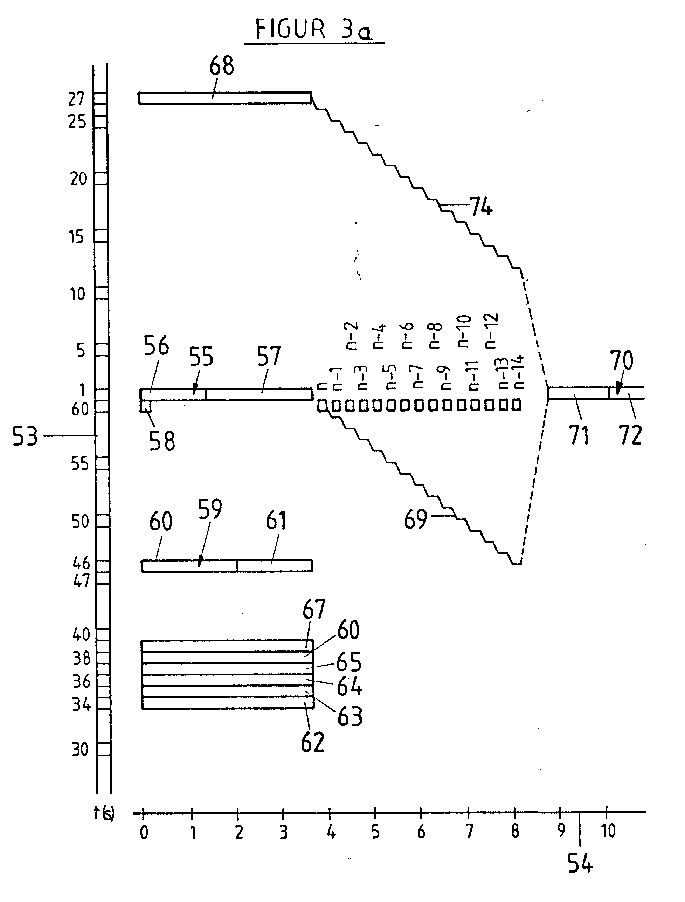

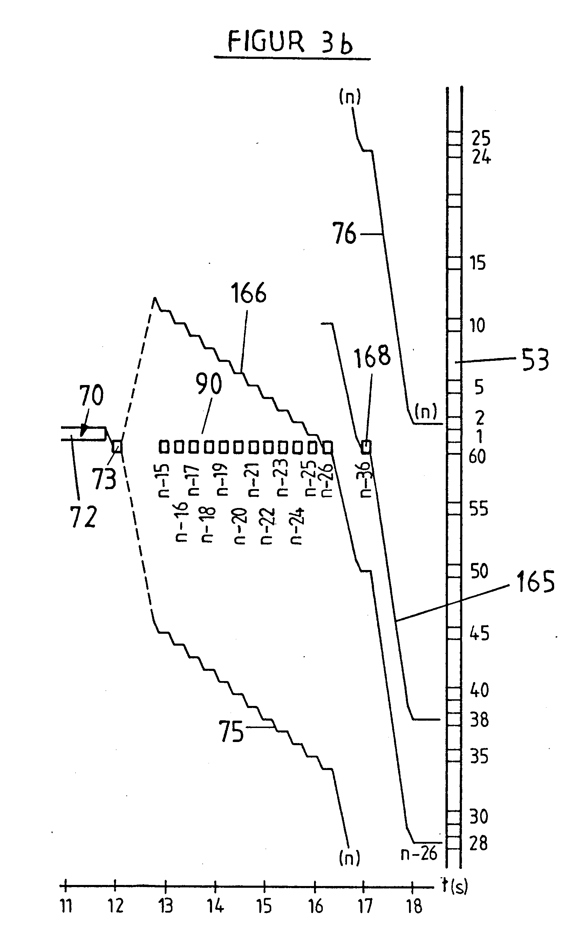

Das andere Gehäuse 27 mit einer Mischeinrichtung 32 ist demgegenüber in einem Abstand angeordnet, der noch besonders anhand der Fig. 3 beschrieben wird.

Aus Fig. 2 ist weiterhin erkennbar, daß am Gehäuse 29 verschiedene Funktionsanschlüsse 33 vorgesehen sind, die im Uhrzeigersinn folgende Funktionen umfassen:
Spülen mit Systemflüssigkeit und Reinigungszugaben, zwei weitere Spülvorgänge, Füllung der Reaktionsküvette mit Wasser, Absaugen dieser Füllung und Trocknen der Reaktionsküvetten.

Ferner ist der Meßlösungsübertrager 22 erkennbar, und zwar gemäß Fig. 2 in einer gestrichelten Stellung über der Bahn der Reaktionsküvetten im Reaktionsrotor 1 und in der ausgezogenen Stellung über einem Modul 34, in welchem neben einer Verbindung mit einer sogenannten optional angeordneten Arbeitsanalyse andere Behandlungsvorrichtungen vorgesehen sind.

Weiterhin ist aus Fig. 2 der Eingang 19 für eine Spülstation insgesamt, die Probenbereitstellungsanordnung 2 und die sogenannte Reagenzeinheit 3 erkennbar. Aus Fig. 2 ergibt sich, daß die Probenbereitstellungsanordnung eine Führung 35 für eine Kette 36 mit Gefäßen besitzt, wobei dieser Kette ein Schrittantrieb durch wenigstens ein Schrittantriebsrad 37 zugeordnet ist, das mit radialen Armen zwischen Küvetten greift.

Die Probenbereitstellungsanordnung hat für die Kette einen kreisbogenförmigen Zuführungskanal 38 als Führung 35, innerhalb dessen ein besonderer Drehteller 39 für Notfallproben angeordnet ist. Das bedeutet, daß in diesem Drehteller bei medizinischer Anwendung in einem Notfall, d.h. bei plötzlicher Einlieferung eines Kranken mit erforderlich werdender Operation aus dem Körper entnommene Proben in den Drehteller 39 gebracht werden können und die Betätigung einer entsprechenden Befehlstaste die anderen Vorgänge unterbricht und den Weitergang des Gerätes mit der Notfallprobe durchführt.

Die Reagenzeinheit 3 an der anderen Seite des Reaktionsrotors 1 besitzt mehrere Kolonnen und Reihen zur Unterteilung in Fächer 41 bis 45, in denen für die durchzuführenden Analysen erforderliche Reagenzien untergebracht sind, die für eine Anwendung oder mehrere Anwendungen in verschiedenen Zugabeschritten bereitgehalten werden. Die Übertragungsvorrichtung, von der eine Form in Fig. 1 gezeigt ist, ist so ausgelegt, daß sie die gesamte Flächenerstreckung der Reagenzeinheit 3, der Probenbereitstellungsanordnung 2 und auch den Bereich der Anordnung von Eingängen bzw. Arbeitsvorrichtungen am Reaktionsrotor 1 überstreichen kann.

Die Mischeinrichtungen 31 und 32 sind so ausgeführt, daß während einer Ruhestellung beispielsweise an den zentralen Stellen ein Mischelement für mechanische Mischung oder auch ein pneumatisches Element für Mischung durch Druckluftaufwirbelung herunter-, insbesondere in eine Reaktionsküvette gefahren werden kann. Andere Einflüsse zur Mischung sind, soweit sie bekannt sind, einsetzbar.

Aufgrund der festen Zuordnung der Arbeits- oder Funktionseinrichtungen zum Reaktionsrotor 1 lassen sich eine optimierte Beschickung und Entnahme sowie Behandlung von Proben in Reaktionsküvetten durchführen, die mit dem Reaktionsrotor 1 entsprechend der Kreislinie 46 umlaufen.

Diese Vorrichtung nach Fig. 2 zeigt aber nur allgemeine Gesichtspunkte eines gerätemäßigen Aufbaues in Teildarstellung bzw. auch schematisch, weil die Übertragungsvorrichtung im einzelnen nicht gezeigt, sondern nur schematisch durch den Bügel 47 angedeutet ist. Dabei ist auch erkennbar, daß nicht der gesamte Reaktionsrotor 1 abgedeckt werden muß, sondern nur die für die Proben- und Reagenzienzuführung oder -entnahme vorgesehenen Eingänge 48, 49 der Mischeinrichtungen 31, 32. Dieses beschränkt die Eingaben auf wenige Stellen, so daß die Reaktionsküvetten im Reaktionsrotor neben den geschilderten Gehäusen 26, 27, 29 abgedeckt werden können, so daß Verschmutzungen, Verstaubungen und auch Verdunstungen und damit Verunreinigungen der Raumluft vermieden werden.

In Fig. 2 ist, darauf wird noch hingewiesen, ein besonderes äußeres Modul 50 angeordnet, in welche durch den Meßlösungsübertrager Meßlösungen aus Reaktionsküvetten, und zwar einem speziell vorgesehenen Eingang bei 51 übertragen werden können.

Wenn im übrigen die optische Meßeinrichtung 30 in einer bestimmten Ausgestaltung zur Kontrolle bestimmter Analysen angepaßt oder eingestellt wird, wird beispielsweise ein Filterrotor 52 verstellt.

Die Fig. 3 erläutert das Gerät im Zusammenhang mit den zugeordneten Arbeitspositionen in schematischer Weise. In Fig. 3 ist links die linearisierte Darstellung 53 der Arbeitspositionen am Reaktionsrotor eingezeichnet. Diese Darstellung 53 ist von eins bis sechzig numeriert, so daß diese Darstellung 53 den Umfang des Reaktionsrotors versinnbildlicht, d.h. daß das obere Ende über der Eintragung siebenundzwanzig mit dem unteren Ende mit der Eintragung dreißig in Verbindung steht. Hierbei handelt es sich bei der Numerierung um zugeordnete Rotorpositionen.

Wenn in den Fig. 1 und 2 die optische Meßeinrichtung 30 entsprechend der Linie 28 vorgesehen ist, so entspricht diese räumliche Arbeitsstellung der Meßposition sechzig in der Darstellung 53. In der mit eins bezeichneten Umfangsstellung am Reaktionsrotor ist die Mischeinrichtung 31 mit dem Eingang 48 angeordnet. Damit zeigt Fig. 3, daß diese beiden Teile bezüglich eines vollständigen Umlaufs um nur einen Arbeitsschritt des Reaktionsrotors gegeneinander versetzt sind.

Die Einteilung des Reaktionsrotors in sechzig Umfangsstellungen ist eine für das Beispiel gewählte willkürliche Zahl. Diese gibt aber an, daß in einem solchen Reaktionsrotor sechzig Reaktionsküvetten angeordnet werden können, die verschiedenen Arbeitspositionen am Umfang des Reaktionsrotors zugeführt werden können, wobei solche Arbeitspositionen im Hinblick auf eine effektive Durchführung der Analyse mit Abstand voneinander um den Umfang des Reaktionsrotors entsprechend den Angaben an der Darstellung 53 angeordnet sind.

Zu Fig. 3 wird bemerkt, daß die Darstellung 53 nur in diesem Zusammenhang der räumlichen Anordnung zugeordneter Rotorpositionen zu sehen ist. Die Zeitachse 54 stellt einen Analysentakt des Reaktionsrotors in jeder Arbeitsposition dar. Dieser Analysentakt beträgt im Beispiel achtzehn Sekunden, eine gewählte Größe. Grundsätzlich wird dazu bemerkt, daß zur Erläuterung des Analysentaktes hinsichtlich der gezeichneten Kurven nur der Verlauf für zwei Reaktionsküvetten gezeigt ist, nämlich für die Reaktionsküvette n und n-26 und teilweise auch für die Reaktionsküvette n-36, während für die für die anderen Reaktionsküvetten n-1 bis n-26 nur formale Stellungen in der Meßposition eingezeichnet sind.

Bei der gewählten Bestückungsmöglichkeit des Reaktionsrotors mit sechzig Küvetten erfolgt im Sinne eines Analysentaktes für die Maschinenauslegung für Reaktionsküvetten eine Blockbildung, die im Ausführungsbeispiel siebenundzwanzig Küvetten n ... n-26 umfaßt. Alle diese Reaktionsküvetten können innerhalb eines Analysentaktes verschiedenen Arbeits- bzw. Funktionspositionen zugeführt werden. Im Verlaufe des Weiterrückens des Reaktionsrotors in einem folgenden Umfangsbewegungsschritt nach einem Analysentakt wandert die Reaktionsküvette aus dem Block heraus und eine andere wird in den Block aufgenommen. Es besteht durchaus die Möglichkeit, auch einen Block mit einer anderen Zahl von Reaktionsküvetten festzulegen, der in einem Analysentakt der Behandlung in den verschiedenen Arbeitseinrichtungen unterworfen wird.

Aus Fig. 3 ist ersichtlich, daß den zugeordneten Rotorpositionen eins bis sechzig folgende Arbeitsvorgänge, d.h. Einsatz entsprechender Arbeitseinrichtungen, zugeordnet sind: An der Umfangsposition eins am Rotor befindet sich in der angegebenen Aktivitätszeit 55 ein Abschnitt 56 für Probenzugabe und ein Abschnitt 57 für Probenmischung. Unmittelbar entgegen der fortschreitenden Zählung der zugeordneten Rotorposition befindet sich die Rotorposition 60, in welcher die Aktivitätszeit 58 für eine Messung vorgesehen ist, in welcher die optische Meßeinrichtung wirksam ist.

In dem dargestellten Beispiel ist an der Umfangsstellung sechsundvierzig des Reaktionsrotors eine Aktivitätszeit 59 angeordnet, welche den Abschnitt 60 für Reagenz-1-Zugabe und 61 für die Reagenz-1-Mischung aufweist. An den Umfangspositionen vierunddreißig bis neununddreißig ergeben sich sechs Aktivitätszeiten 62 bis 67, an denen in der genannten Reihenfolge die Arbeitsvorgänge Spülen der Reaktionsküvetten mit Systemflüssigkeit oder Reiniger, mehrfaches Spülen - Füllen mit Wasser oder einer anderen Flüssigkeit für den Küvetten-Leerwert - Absaugen - und Trocknen durchgeführt werden.

An der Umfangsposition siebenundzwanzig ist die Aktivitätszeit 68 für den beispielsweise in Fig. 1 und 2 dargestellten Meßlösungsübertrager 22 angeordnet.

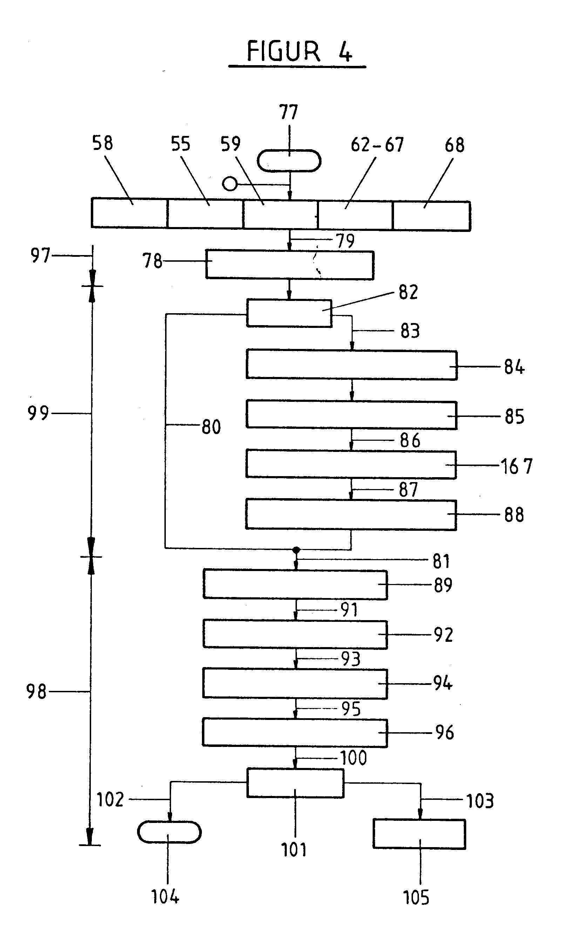

Daraus ist ersichtlich, daß mehrere Arbeitspositionen mit Arbeitseinrichtungen fest um den Umfang des drehbaren Reaktionsrotors 1 verteilt sind. Die Fig. 3 zeigt aber über der Zeitachse 54 einen ganz bestimmten Vorgang für einen Analysentakt von achtzehn Sekunden, wobei innerhalb dieses Analysentaktes durch die Verteilung der Arbeitseinrichtungen um den Umfang des Reaktionsrotors 1 an den verschiedenen Umfangspositionen verschiedene Reaktionsküvetten den jeweiligen Vorgängen unterworfen sind. Das wird noch anhand der Fig. 4 verdeutlicht werden.

Bezüglich der Fig. 3 wird darauf hingewiesen, daß an der Umfangsposition sechsundvierzig zunächst das Reagenz-1 zugegeben und gemischt wird. Dann dreht sich der Reaktionsrotor 1 während der Durchführung von 15 Analysentakten in die Umfangsposition sechzig, in welcher die Reagenzmessung erfolgt, um überhaupt den Zustand des Reagenz erfassen zu können. Im Verlauf dieser Analysentakte erreicht das Reagenz die Solltemperatur. Die Weiterbewegung um einen Bewegungsschritt in die Umfangsposition eins führt zu der Aktivitätszeit 55, in welcher nun eine Probe zugegeben und eingemischt wird. Dazu bleibt, wie auch in der Aktivitätszeit 59, genügend Zeit. Diese Vorgänge können daher mit genügender Sicherheit durchgeführt werden. Nach Ablauf dieser Aktivitätszeit bringt der Antrieb des Reaktionsrotors 1 die soeben behandelte Reaktionsküvette n in die Meßeinrichtung an der Umfangsposition sechzig. Es ist erkennbar, daß jetzt die Messung nur eine sehr kurze Zeit in Anspruch nimmt.

Die Stufenkurve 69 zeigt mit der Rückwärtsbewegung des Reaktionsrotors 1, wie entsprechend vorstehender Erläuterung auch die vorhergehenden Reaktionsküvetten bis n-14 einer solchen Messung nach Probenzugabe unterworfen werden.

In dem Ausführungsbeispiel wird nach der Messung der Reaktionsküvette n-14 der Rotor für eine beliebige Reaktionsküvette n bis n-26 wieder in die Umfangsposition eins zurückbewegt, wobei im Verlauf des Analysentaktes eine Aktivitätszeit 70 für ein in der Funktion wahlfreies Fenster für einen Steuerungsablauf wirksam wird, und zwar mit einem Abschnitt 71 als Reagenz-2-Zugabe und einem Abschnitt 72 für eine Reagenz-2-Mischung. Eine solche Einschaltung kann von Analysentakt zu Analysentakt beliebig gewählt werden, stellt aber für die Variation und Anpassungsfähigkeit des beschriebenen Gerätes ein wesentliches Merkmal dar.

Wenn in der Aktivitätszeit 70 eine Funktion durchgeführt wird, erfolgt wiederum eine Bewegung des Rotors, um dann, wenn als Funktion ein Reagenz-2 zugegeben worden ist, eine Aktivitätszeit 73 einzusetzen, in welcher wiederum eine Messung der Reaktionsküvette erfolgt.

Wenn die Aktivitätszeit 70 funktionsfrei bleibt, geht die Stufenkurve 69 in die schrittweise Weiterschaltung entsprechend der Stufenkurve 75 über, welche entsprechend dem gewählten Küvettenblock nach der angezeigten Meßposition für eine Reaktionsküvette n-26 dann gemäß der Kurve 76 in die Rotorposition 2 übergeführt wird. Aus der in der Rotorposition 24 angegebenen Stufe in der Kurve 76 erkennt man, daß dort ein weiterer Vorgang stattfindet, und zwar eine Messung des Küvetten-Leerwertes. Der Versatz ist im Ausführungsbeispiel aufgrund der Zeit des Analysentaktes vorhanden, weil, wie durch die Kurve 165 gezeigt ist, in der Rotorposition 60 gerade die Reaktionsküvette n-36 der Leerwertmessung unterworfen wird.

Zur Verdeutlichung ist gezeigt, daß dann, wenn die Reaktionsküvette sich in der Aktivitätszeit 55 befindet, die Reaktionsküvette n-26, die sich an der anderen Grenzposition des ausgewählten Blockes Reaktionsküvetten befindet, in der eine Bearbeitung in der Aktivitätszeit 68 durchgeführt werden kann. In dieser Aktivitätszeit 68 kann beispielsweis der Meßlösungsübertrager 22 wirksam werden.

Entsprechend der Weiterbewegung der Reaktionsküvette n entlang den Stufenkurven 69, 75 wird diese Reaktionsküvette n-26 entlang den Stufenkurven 74 und 166 bewegt, wobei zwischen diesen Stufenkurven erkennbar die Aktivitätszeit 70 für das in der Funktion wahlfreie Fenster angeordnet ist.

Die Aktivitätszeiten 62 bis 67 für Einrichtungen, die in dem Gehäuse 29 angeordnet sind, werden gemäß obiger Erläuterung eingesetzt.

Während die Messungen in der Aktivitätszeit 58 relativ kurz sind, ist erkennbar, daß die Aktivitätszeiten 55, 59, 68 und 70 zur Durchführung ihrer Funktion eine erheblich größere Dauer haben, die in dem beispielsweise achtzehn Sekunden währenden Arbeitstakt untergebracht ist. Es ist weiterhin erkennbar, daß dann, wenn eine Reaktionsküvette einen vollständigen Arbeitsumlauf des Reaktionsrotors durchgeführt hat, diese Reaktionsküvette gereinigt und gespült wird und zur Aufnahme eines neuen ersten Reagenz zur Verfügung steht.

Die gezeigte Auslegung erbringt aber erstmals die Möglichkeit, durch Hin- und Herdrehung des Reaktionsrotors 1, insbesondere zum Einsatz einer Aktivitätszeit 70, die beispielsweise für Reagenz-2-Zugabe und Reagenz-2-Mischung ausgenutzt werden kann, aber auch für andere Funktionen, nämlich Übertragungen zwischen verschiedenen Reaktionsküvetten, Entnahmen von Flüssigkeitsbestandteilen unter folgender Zuführung anderer Flüssigkeiten, mehrere Zugaben etc. eine gerätemäßig kleinste Ausstattung bei großem Analysenumfang zu erreichen.

Dieses geht deutlicher aus Fig. 4 hervor. Die Figur 4 zeigt ein Ersatzschaltbild in Form eines Schaubildes, um die Funktionen in ihrem Ablauf zu verdeutlichen. Dabei sind Steuerbaugruppen angegeben, welche den Einsatz mechanischer Zusatzgeräte steuern, wie nämlich einer Übertragungsvorrichtung, der Meßvorrichtung, wobei die Übertragungsvorrichtung zur Eingabe und Entnahme mit Druck- oder Saugkräften versehen wird. Dazu sind Pumpen und entsprechende Teile enthalten. Dieses gilt für die Steuerbaugruppe 55, die zugeordneten Funktionsteile, wie Steuerbaugruppen entsprechend dem Feld 78 und für Steuerbaugruppen entsprechend den Feldern 89 ff., wobei aber auch im Bereich der Funktionslinie 83 Steuerbaugruppen vorhanden sind, welche für die Durchführung oben erwähnter Funktionen in dem wahlfreien Fenster die dafür erforderlichen Geräte aufweisen.

Die Funktionsfelder 82 und 101 sind Vergleichseinrichtungen, welche an einem enthaltenen Normalwert die Eingangsgröße messen und in Abhängigkeit vom Vergleichswert dann eine Weiterschaltung der Anlage in dem einen oder anderen Sinne, d.h. entsprechend der Funktionslinie 80 oder der Funktionslinie 83 bis zu dem Ausgang 102 oder dem Ausgang 103 des Funktionsfeldes 101 bewirken. Damit ergibt sich auch für die Fig. 4 die Grundlage einer gegenständlichen Ausführung.

Unter diesem Gesichtspunkt wird darauf hingewiesen, daß in Fig. 4 das Feld 77 den Start für den Ablauf eines Analysentaktes zeigt, wie er in Fig. 3 über der Zeitachse 54 gezeigt ist. Dieses entspricht der Umfangsstellung eins an der Darstellung 53 gemäß Fig. 3. Die Küvette n befindet sich dabei in der Aktivitätszeit 55 für Zugabe und Mischung einer Probe. Eine Reaktionsküvette n+1, d. h. eine benachbarte Reaktionsküvette, befindet sich dabei in der Aktivitätszeit 58 für Reagenzmessung. Gleichzeitig befindet sich in der angenommenen Numerierung eine Reaktionsküvette n+15 in der Darstellung 53 an der Umfangsposition sechsundvierzig, an der die Aktivitätszeit 59 für die Zugabe und Mischung eines Reagenz eins vorgesehen ist.

Entsprechend der angegebenen Zählung befinden sich Reaktionsküvetten n+22 bis n+27 im Bereich der Aktivitätszeiten 62 bis 67 an den Umfangspositionen vierunddreißig bis neununddreißig, so daß deren Funktionen an diesen Reaktionsküvetten durchgeführt werden, wobei eine Reinigung stattfindet.

Unter Berücksichtigung vorstehender Zählung befindet sich gleichzeitig eine Reaktionsküvette n-26 an der Umfangsposition siebenundzwanzig, d. h. im Bereich der Aktivitätszeit 68 des Meßlösungsüberträgers, der in den vorherigen Figuren mit 22 bezeichnet ist.

Allen beschriebenen Aktivitätszeiten in diesem Bereich ist eine bestimmte Dauer eigen. Hier und im Bereich der Stufenkurven 69 und 75 liegt ein starrer Ablauf bei der Weiterschaltung des Reaktionsrotors vor.

Dieses ist eine Auswahl für die Betriebsweise. Diese Messung ist in Fig. 4 durch das Feld 78 gekennzeichnet, wobei die Weiterschaltung in dieses Feld durch den Pfeil 79 symbolisiert ist. Diese Messungen und die vorherigen Vorgänge finden zwangsläufig statt, wobei eine schrittweise Drehung des Funktionsrotors entgegen dem Uhrzeigersinn, d. h. in der zweiten Drehrichtung, erfolgt.

Die Steuerung berücksichtigt im Anschluß daran eine Funktionseingabe, indem in Abhängigkeit davon festgestellt wird, ob eine Pause stattfindet oder aber eine flexibler Einsatz benötigt wird. Wenn eine Pause eingelegt wird, dann erfolgt ein Stillstand entsprechend der Funktionslinie 80 in Fig. 4 zu einem Weitertransport entsprechend dem Pfeil 81 in einen wiederum starren Ablauf. Wird aber am Funktionsfeld 82 anhand der Analyseneingabe festgestellt, daß weitere Behandlungen oder Reagenzien erforderlich sind, dann wird der Reaktionsrotor entsprechend der Funktionslinie 83 weitergeschaltet in ein Funktionsfeld 84, welches den Transport einer Reaktionsküvette zur Probenzugabe und Mischstation entsprechend der Aktivitätszeit 70 bewirkt, die der Aktivitätszeit 55 mit der Probenzugabe und Mischung entspricht, was bezüglich Fig. 4 dem Feld 85 zugeordnet ist. Dieses Feld enthält außerdem auch die Möglichkeit einer Aufnahme aus einer Reaktionsküvette, wobei die Übertragungsvorrichtung in dieser Betriebsstellung entsprechend steuerbar ist. Wenn dieser Vorgang mit der Aktivitätszeit 70 eingesetzt wird, erfolgt eine Weiterschaltung entsprechend der Funktionslinie 86 in die Meßposition gemäß Feld 167, wobei diese Drehung entgegen dem Uhrzeigersinn stattfindet und diese Meßposition durch die Aktivitätszeit 58 dargestellt ist (Fig. 3).

Entsprechend der Funktionslinie 87 wird dann die behandelte Reaktionsküvette in die Ausgangsstellung entsprechend Feld 88 zurücktransportiert. Das ist die Ausgangsposition entsprechend dem Feld 82, so daß dann der Vorgang weiter durchgeführt werden kann.

Es schließt sich entsprechend dem Pfeil 81 als Funktionsstrecke die Weiterschaltung in einen starren Ablauf zum Antrieb des Reaktionsrotors an, wobei zunächst gemäß Feld 89 eine Messung von Reaktionsküvetten n-15 bis n-26 entsprechend den Aktivitätszeiten bei 90 in Fig. 3 erfolgt. Darauf wird bei einer Weiterschaltung um einen Schritt entsprechend der Funktionslinie 91 eine spezielle Küvette n-36 an die Umfangsposition sechzig bewegt, was durch das Feld 92 zum Ausdruck gebracht wird.

Ein weiterer Arbeitsschritt gemäß der Funktionslinie 93 führt entsprechend dem Arbeitsfeld 94 dazu, daß die erwähnte Küvette n-36 in der Aktivitätszeit 168 auf ihren Leerwert gemessen wird.

Die Weiterschaltung entsprechend der Funktionslinie 95 führt entsprechend dem Funktionsfeld 96 dazu, daß die Küvette n+1 in die Umfangsposition eins zur Probenzugabe und -mischung gelangt, wie in Fig. 3 dargestellt ist.

Insofern besteht der Ablauf nach Fig. 4 aus drei Abschnitten, nämlich einem Abschnitt 97 und einem Abschnitt 98, die als starre Abläufe bezeichnet werden können, und einem Abschnitt 99, der als flexibler Ablauf zu bezeichnen ist, weil hier eine Anpassung an besondere Aufgaben hinsichtlich bestimmter Proben oder Reagenzien vorliegt.

Im Bereich des starren Ablaufs ist hinter dem Feld 96 eine Funktionsverbindung 100 vorgesehen, und zwar in Zusammenschaltung mit einer Vergleichseinrichtung für angegebene Aufgaben, welche Vergleichseinrichtung mit 101 bezeichnet ist und festgestellt, daß entweder am Ausgang 102 die Beendigung der Probenbehandlung gemäß Feld 104 angezeigt wird oder am Ausgang 103 signalisiert wird, daß die Funktionssteuerung gemäß Steuerung durch Feld 105 auf den Beginn eines neuen Analysentaktes zurückgesetzt wird.

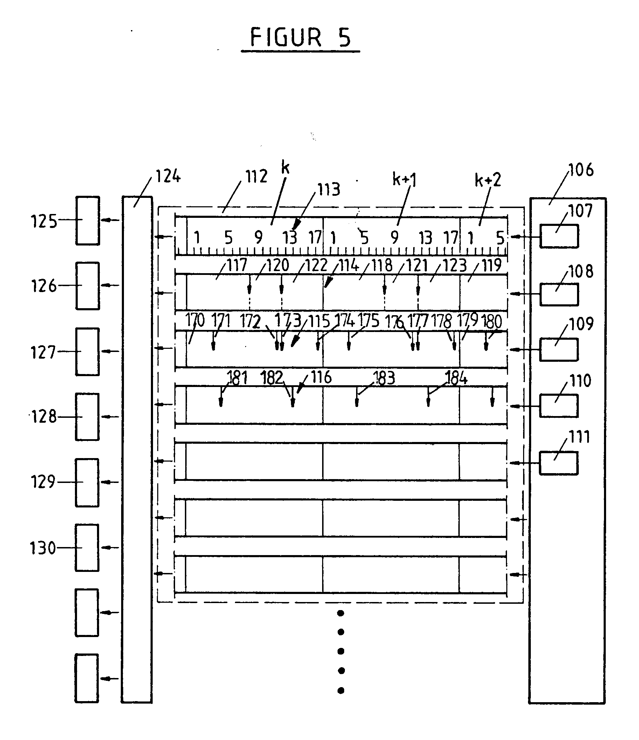

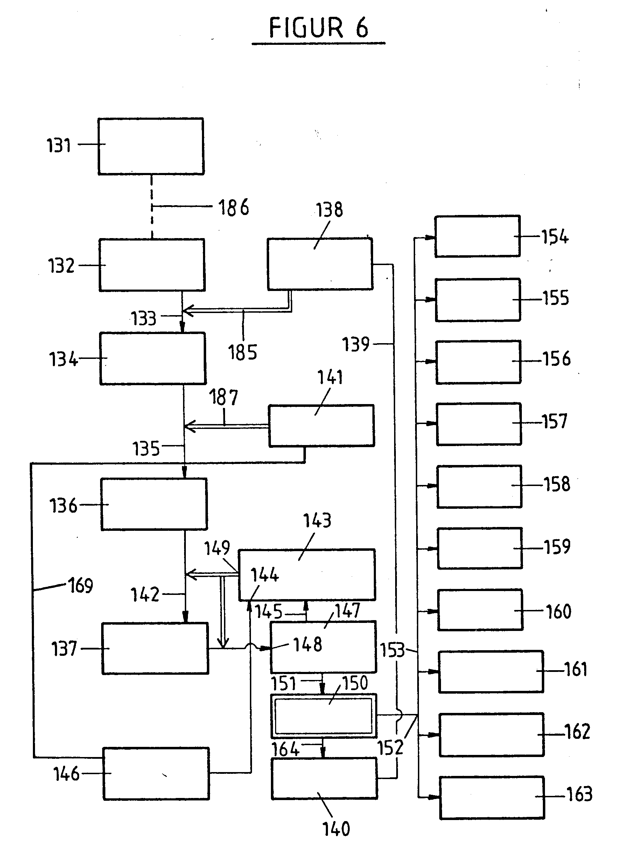

In den Fig. 5 und 6 ist nach der Darstellung der Arbeitsabfolge gezeigt, wie diese gesteuert wird. Das Gerät hat eine Baugruppe mit einer Aufnahmevorrichtung 106, die mit der Bezeichnung Belegungstabellen versehen ist. Belegungstabellen können ausgeschriebene, ausgedruckte, gelochte oder auch in anderer Weise umgesetzte Angaben enthalten, welche beispielsweise umfassen: 107 einen Zeittaktgeber für eine Zeitsynchronisation, d.h. eine Uhrschaltung; 108 eine Antriebsvorrichtung für den Reaktionsrotor 1; 109 eine Einstellvorrichtung für die optische Meßeinrichtung, d.h. ein Photometer und als Einstellvorrichtung gegebenenfalls eine Blendenverstellung; 110 eine Antriebsanweisung für die Übertragungsvorrichtung 4 zur Übertragung einer Probe und wenigstens eines Reagenz; 111 eine Betriebsvorschrift für eine Dosiereinrichtung für die Probenzugabe und der Zugabe eines Reagenz-2.

Solche als Belegungstabellen bezeichneten Vorschriften können in verschiedener Weise ausgeführt sein. Sie können in die folgenden Baugruppen von Hand einzugeben sein. Sie können aber auch in einer mechanisch oder elektronisch ablesbaren Weise ausgeführt sein, so daß eine automatische Eingabe in eine Baugruppe 112 mit entsprechenden Aufzeichnungs- und Sendespuren 113, 114; 115, 116 ... erfolgt. Die Spur 113 zeigt für die Takte k, k+1, k+2 gleichmäßige Zeitabfolgen. Diesen zugeordnet sind die anderen Spuren, von denen die Spur 114 mit der Eingabe für die Antriebsvorrichtung 108 in jedem der Analysenzeit- bzw. Zeittakte k, k+1, k+2 die Bereiche 117, 118, 119 für den starren Ablauf, 120, 121 für einen methodengesteuerten bzw. flexiblen Ablauf und 122, 123 wiederum für einen starren Ablauf aufweist. Zu der Bezeichnung starrer und flexibler Ablauf wird auf die anhand der Fig. 4 erläuterten Abschnitte 97, 98 für die starren Abläufe und 99 für den flexiblen Ablauf hingewiesen.

Die Aufzeichnungs- und Sendespur 115, welche in Abhängigkeit von der Einstellvorrichtung 109 für die optische Meßeinrichtung betrieben wird, weist an den durch Pfeile zugeordneten Stellen hinsichtlich auch des Zeittaktes und der Abläufe besondere Befehle für Filtereinstellungen zwecks Wahrnehmung bestimmter Wellenlängen 1,8 ... x auf, so daß auch dadurch eine Sendespur 115 entsprechend belegt ist.

Damit sind bezüglich der Fig. 5 in folgenden Punkten folgende Angaben enthalten:
- 170:: λ 1,k
- 171:: λ 2,k bis λ 16,k
- 172, 173:: λ 17,k
- 173:: λ 18,k bis λ 29,k
- 174:: λ 30,k bzw. hinter der Trennungslinie entsprechend der Taktunterteilung λ 1,k+1
- 175:: λ 2,k+1 bis λ 16,k+1
- 176:: λ 17,k+1
- 177:: λ 18,k+1 bis λ 29,k+1
- 178:: λ 30,k+1
- 179:: λ 1,k+2
- 180:: λ 2,k+2 bis λ 16,k+2

Die Sendespur 116 wird beispielsweise entsprechend der Antriebsanweisung 110 betrieben, und zwar für den Probeneintrag und ein Reagenzeintrag. Dabei gilt für die markierten Stellen: 181 - Aufnahmeort/Abnahmeort (Reagenz), 182 - Aufnahmeort/Abgabeort (Probe), 183 - Aufnahmeort/Abnahmeort (Reagenz) und 184 - Aufnahmeort/Abgabeort (Probe). Entsprechend kann die Aktivitätszeit weiter ausgelegt werden. Es versteht sich, daß die Sendespuren 113 bis 116 gegenständlich vorliegen, entweder als Magnetbänder mit gespeicherten Befehlen, als Lochbänder, als Zackenbänder oder dergleichen, wie es auch immer zum Antrieb von oder zur Befehlsgabe für nachgeordnete Aggregate notwendig ist.

Alle diese Spuren werden zusammengefaßt in einer sogenannten Taktsteuerung 124. Hierbei handelt es sich um eine Schaltungsanordnung, in welcher die Informationen aus den Spuren 113 bis 116 so ausgewertet werden und zusammengesetzt werden, daß sie in die Aggregate 125 bis 130 weitergegeben werden können. Hierbei kann es sich um den Antrieb des Reaktionsrotors, beispielsweise 125, um die Einstellung eines Filters in der optischen Messung, beispielsweise 126, um eine Verstärkerschaltung für eine Umschaltung in der Antriebsvorrichtung, beispielsweise 127, um einen Antrieb für den Meßlösungsübertrager 22, beispielsweise 128, um Probenbeschickungseinrichtungen und Reagenzbeschickungseinrichtungen besonderer Art, beispielsweise 130, handeln. Dieses Schema nach Fig. 5 zeigt eine Möglichkeit des Betriebes und seiner Steuerung, welche nach Fig. 6 noch besonders verdeutlicht wird.

Fig. 6 hat drei Spalten. Die linke Spalte enthält mit den vom Benutzer eingesetzten Eingabedaten verbundene Informationsgruppen, dargestellt in Form von Feldern 132, 134, 136, 137 und 146, die rechte Spalte enthält Aggregate 154 bis 163 und die mittlere Spalte zeigt Steuerbaugruppen und Eingaben zur Beeinflussung der jeweiligen Informationsgruppen, insbesondere in der linken Spalte, wobei auch Rückbeziehungen gezeigt sind.

Dabei ist erkennbar, daß in der mittleren Spalte (Fig. 6) ein Feld 147 mit der Bezeichnung "Belegungstabellen der Aggregate", vergleichbar mit der Aufnahmevorrichtung 106 nach Fig. 5, und ferner ein Feld 150 enthalten ist, das ein Taktsteuerungsaggregat darstellt und somit der Taktsteuerung 124 der Fig. 5 entspricht. An die Taktsteuerung 124 sind nach Fig. 5 die Aggregate 125 bis 130... angeordnet. Diese stimmen zum Teil überein bzw. ergänzen die Aggregate 154 bis 163 in Fig. 6, die gemäß Fig. 6 auch ersichtlich über einen Ausgang 152 und eine symbolisch dargestellte Schiene 153 von dem Taktsteueraggregat 150 gesteuert werden.

Im einzelnen wird zur Fig. 6 bemerkt: Das Feld 131 betrifft insgesamt die Eingabedaten als Eingabeaggregat. Hierbei kann es sich um ein Gerät mit Tastenfeld, um ein Lochkartengerät, um ein Zeichengerät für eine abtastbare Kurve oder dergleichen handeln. Erkennbar ist, daß in Abhängigkeit von den Eingaben in das Feld 131 ein Vorgang abläuft. Der Funktionszusammenhang von Feld 131 zu der folgenden Spalte wird durch die Funktionsverbindung 186 angegeben.

Einbezogen wird dabei auch, dieses wird für den besonderen Fall vorgesehen, eine Notfallanforderungsliste als Anweisung gemäß Feld 132. Dieses gilt für den Einsatz zur Krankenbehandlung. Diese Eingabe wird über eine Funktionsstrecke 133 zu einer Überprüfung nach einer Methodenliste gemäß Feld 134 unterworfen, die Eigenschaften von Patienten aufweist.

In Abhängigkeit von dieser Überprüfung wird über eine Funktionsstrecke 135 eine Patienten-orientierte, sogenannte sortierte Methodenliste gemäß dem Feld 136 weitergegeben an eine Abarbeitungsliste 137, welche Weisungen herausgibt, wie zu arbeiten ist. In diesem Zusammenhang ergeben sich aber Quereinspeisungen gemäß Darstellung. Dabei ist eine Quereinspeisung 185 aus einem Befehlsfeld 138 der mittleren Spalte in Fig. 6 im Zusammenhang mit der Notfallsteuerung unter der Bedingung der Eingliederung in die Methodenliste gemäß Feld 134 vorgesehen. Dieses Befehlsfeld 138 steht unter der Steuerung einer Befehlsschaltung 140, welche den Abarbeitungszustand des Gerätes übernimmt und Signale über die Funktionsverbindung 139 zu dem Befehlsfeld 138 bzw. der entsprechenden Schaltung liefert. Der Abarbeitungsstand ergibt sich aus dem Ablauf einer Funktionsfolge in dem Gerät.

In die Funktionsstrecke 135 werden Prioritätssignale aus einem Feld 141 eingespeist, welches gespeicherte Angaben für die Prioritätsorientierung besitzt, damit bei der Durchgabe von Signalen auf der Funktionsstrecke 135 im Feld 136 zugleich die Priorität für anzuwendende Methoden, gegebenenfalls aber auch Patienten, eingespeist wird. Diese Schaltungsanordnung gemäß Feld 141 ist durch eine Funktionsstrecke 169 mit einem Signalgeber 146 verbunden, der Informationen über die Aggregatbeanspruchung in Abhängigkeit von einer Methodendefinition liefert. Entsprechend wird in die Funktionsstrecke 142 zwischen den Schaltungsgruppen der Felder 136, 137 aus einer Signalvorrichtung 143 ein Signal für die Eingliederung in eine Belegungstabelle eingespeist, wobei die Signalvorrichtung 143 zwei Eingänge 144, 145 hat, von denen einer 144 aus einem Signalgeber 146, der Signale über Aggregatbeanspruchung in Abhängigkeit von einer Methodendefinition liefert, und der andere Eingang 145 aus einer Signalquelle 147 gespeist wird, welche den Belegungszustand der jeweiligen einzusetzenden Aggregate beinhaltet. Diese Anordnung sorgt dafür, daß in dem wenigstens für eine Funktion freiem Fenster gleichzeitige Beanspruchungen von Arbeitspositionen durch verschiedene Reaktionsküvetten vermieden werden.

Die Signalquelle 147 wird über einen Eingang 148 mit Signalen gespeist, welcher von dem Aggregat 137 mit Auswertung der Abarbeitungsliste kommt. Zugleich wird die Signalquelle 147 von einem Ausgang 149 der Signalvorrichtung 143 beeinflußt, der mit dem Eingang 148 verbunden ist, so daß auch die Eingliederung in die Belegungstabelle eingeht. Der Ausgang 149 der Signalvorrichtung 143 speist auch in die Funktionsstrecke 142 ein, so daß die Schaltungsbaugruppe gemäß Feld 137 eine entsprechende Information mitverarbeitet.

In dieser Weise ist es möglich, aus der Signalquelle 147 ein Taktsteuerungsaggregat gemäß Feld 150 über eine Funktionsverbindung 151 zu betätigen. Dieses Taktsteuerungsaggregat betreibt durch einen Ausgang 152 über eine symbolische Schiene 153 die Aggregate, welche z. B. umfassen: 154 Photometer, 155 Analysenrotor, 156 Probenküvette, 157 Notfallrotor, 158 Dosiereinrichtung, 159 Übertragungsvorrichtung, 160 Mischvorrichtung, 161 Spülvorrichtung für Kanülen der Übertragungsvorrichtung, 162 Spülvorrichtung für die Reinigung von Küvetten, 163 für außerhalb des Funktionsrotors angeordnete Module.

Das Taktsteuerungsaggregat 150 speist über eine Verbindung 164 in das Feld 140 zur Aufarbeitung des Abarbeitungsstandes ein, so daß aus diesem Funktionsfeld mit den angegebenen Informationen bzw. einem entsprechenden Signalaggregat wiederum eine Beeinflussung zu 138 erfolgt.

## Patentansprüche

1. Verfahren zum Analysieren von flüssigen Proben in Reaktionsküvetten, welche in einer endlosen Reihe in einem drehbaren Reaktionsrotor oder auf einem anderen Träger mit fester Bewegungsbahn angeordnet sind, der schrittweise bewegbar ist, wobei zwischen den Bewegungsschritten in einer ersten Richtung Haltepositionen vorgesehen sind und um den Umfang des Rotors im Bereich jeweils einer Haltepositon stationäre Arbeitspositionen in Verbindung mit Arbeitsvorrichtungen angeordnet sind, welche wenigstens umfassen eine optische Meßeinrichtung, wenigstens zwei Zugabe- und Entnahmevorrichtungen für Probe und Reagenzien und eine Spül- und/oder Küvettenzugabe-und/oder -entnahmevorrichtung sowie Mischvorrichtungen sowie wenigstens eine Übertragungsvorrichtung für die Zugabe- und Entnahmevorrichtungen, wobei der Reaktionsrotor aus jeder Halteposition entsprechend einem Bewegungsmuster von fester Gesamtdauer hin- und herbewegbar ist und das Bewegungsmuster ständig als Analysentakt wiederholt wird und am Ende des Analysentaktes der Reaktionsrotor um einen Umfangsbewegungsschritt in der ersten Drehrichtung weitergestellt ist, ferner der gleiche Analysentakt dann für die in eine entgegengesetzten zweiten Drehrichtung direkt benachbarte Reaktionsküvette wiederholt wird, dadurch gekennzeichnet, daß innerhalb jeden Analysentaktes der Reaktionsrotor auf dem jeweils kürzesten Weg durch Drehrichtungsumschaltung von einer Arbeitsposition zur nächsten bewegt wird und innerhalb jedes Analysentaktes die Zeitdauern, innerhalb welcher in bestimmten Arbeitspositionen des Reaktionsrotors eine Funktion ausgeübt wird oder werden kann, festgelegt sind (Abschnitte starrer Abläufe) und ferner aus dem Umfang des Reaktionsrotors eine Anzahl von hintereinander angeordneten Reaktionsküvetten als ein Block zum Zuführen in verschiedene Arbeitspositionen während eines Analysentaktes steuerungsmäßig zusammengefaßt sind und, daß innerhalb jedes Analysentaktes mindestens eine in der Dauer festgelegte Aktivitätszeit an einem bestimmten Zeitpunkt als für wenigstens eine Funktion wahlfreies Zeitfenster vorgesehen ist-Abschnitt für einen flexiblen Ablauf- in dem nach Maßgabe einer vorgegebenen Analysenreihenfolge der Reaktionsrotor so bewegbar ist, daß wahlweise eine bestimmte Reaktionsküvette aus dem genannten Küvettenblock an eine bestimmte Arbeitsposition bewegt werden kann und weiterhin in diesem für eine Funktion wahlfreien Fenster auch mehrere Arbeitsvorgänge nach Maßgabe der eingegebenen Analysenfolge durchgeführt werden können.

2. Verfahren nach Anspruch 1, dadurch gekennzeichnet, daß die Weiterbewegung des Reaktionsrotors auf dem kürzesten Weg zur nächsten Arbeitsposition in Form einer kontinuierlichen Bewegung durchgeführt wird.

3. Verfahren nach Anspruch 1 oder 2, dadurch gekennzeichnet, daß die wenigstens eine Übertragungsvorrichtung in ausgewählten Haltepositionen in bezug zu entsprechenden Arbeitspositionen mehrere Funktionen im Sinne einer Zuführung, Entnahme und/oder Übertragung zu, von und/oder zwischen verschiedenen Reaktionsküvetten oder -gefäßen durchführt.

4. Verfahren nach einem der Ansprüche 1 bis 3,gekennzeichnet durch eine Arbeitsposition mit einer Übertragungsvorrichtung für die Übertragung mit wenigstens einem Reagenz versehene Probe in eine zusätzliche Bearbeitungseinrichtung außerhalb der Arbeitseinrichtungen am Reaktionsrotor.

5. Analysengerät zur Durchführung des Verfahrens nach einem der Ansprüche 1 bis 4, mit einem Reaktionsrotor (1) als Antriebsträger für Reaktionsküvetten in gleichmäßigem Abstand um den Umfang des Reaktionsrotors, einer Antriebsvorrichtung zum Antrieb dieses Reaktionsrotors, einer Bereitstellungsanordnung (2) für Proben, insbesondere in Form einer Probenkette (36), einer Reagenzeinheit (3) mit einer Vielzahl von Reagenzien in zugänglichen Gefäßen, mit einer Übertragungsvorrichtung (4), welche den Reaktionsrotor, die Bereitstellungsanordnung für Proben und die Reagenzeinheit überspannt und wahlweise einsetzbar ist, um Proben und/oder Reagenzien aufzunehmen und in die Reaktionsküvetten des Reaktionsrotors zu übertragen oder zu entnehmen, einer optischen Meßeinrichtung (30) an dem Reaktionsrotor, Temperiervorrichtungen an dem Reaktionsrotor, Arbeitsvorrichtungen, wie Mischeinrichtung (31, 32), Reinigungsvorrichtung (29) für Reaktionsküvetten an dem Umfang des Reaktionsrotors, Führungs- und Steuereinrichtungen, die den Reaktionsrotor aus jeder Halteposition entsprechend einem Bewegungsmuster von fester Gesamtdauer hin- und herbewegen, das Bewegungsmuster in ständig als Analysentakt wiederholen und am Ende des Analysentaktes den Reaktionsrotor um einen Umfangsbewegungsschritt in der ersten Drehrichtung weiterstellen, ferner den gleichen Analysentakt dann für die in der entgegengesetzten zweiten Drehrichtung direkt benachbarte Reaktionsküvette wiederholen, dadurch gekennzeichnet, daß der Reaktionsrotor (1) auf kürzestem Weg durch Drehrichtungsumschaltung des Antriebs zwischen verschiedenen Haltepositionen in jede Arbeitsposition einstellbar ist und für die Drehung des Reaktionsrotors Zeitabschnitte starrer Abläufe und wenigstens ein Abschnitt für einen flexiblen Ablauf vorgesehen sind, wobei in den Abschnitten des starren Ablaufs die Vorgänge der Zugabe einer ersten Reagenz in eine Reaktionsküvette der Reagenzmessung, der Probenzugabe und -mischung in einer Reaktionsküvette, der Reinigung wenigstens einer Reaktionsküvette und auch einer Absaugung aus einer Reaktionsküvette durchführbar sind, ferner aus dem Umfang des Reaktionsrotors eine Anzahl von hintereinander angeordneten Reaktionsküvetten von der Steuerungseinrichtung als ein Block zum Zuführen in verschiedene Arbeitspositionen während des Analysentaktes zusamAnalysentaktes zusammengefaßt sind, sowie eine Messung einer ersten Gruppe von Reaktionsküvetten und einer zweiten Gruppe von Reaktionsküvetten, die einen Block von Reaktionsküvetten bilden, und ein Transport von Reaktionsküvetten zur optischen Meßeinrichtung (30) zur Nachmessung und weiterhin eines Reaktionsküvetten-Leerwertes vorgesehen sind sowie ein weiterer Transport einer Reaktionsküvette zur Probenzugabe- und Mischstation (48, 31), und daß wenigstens ein Abschnitt für einen flexiblen Ablauf wenigstens eine festgelegte Aktivitätszeit (70) lang in einer Drehstellung des Reaktionsrotors vorgesehen und wahlweise einsetzbar ist, um in dieser Aktivitätszeit für eine Reaktionsküvette eine Reagenzzugabe, Reagenz- und/oder Probenentnahme und/oder -übertragung, gegebenenfalls in eine andere Reaktionsküvette durchzuführen bzw. einzuleiten.

6. Analysengerät nach Anspruch 5, dadurch gekennzeichnet, daß in jeder Halteposition Arbeitstakte bestimmter Dauer vorgesehen sind, in welchen verschiedene Reaktionsküvetten in verschiedenen Arbeitspositionen einer Behandlung unterworfen sind, wobei innerhalb des Arbeitstaktes je nach der Arbeitsposition Arbeitsvorgänge unterschiedlicher Dauer vorgesehen sind.

7. Analysengerät nach Anspruch 5 oder 6, dadurch gekennzeichnet, daß dem Reaktionsrotor (1) außerhalb unmittelbar zugeordneter Arbeitsvorrichtungen äußere Module (50) als Bearbeitungsvorrichtungen zugeordnet sind und wenigstens ein Meßlösungsübertrager (22, 68) zur Übertragung in ein äußeres Modul vorgesehen ist.

8. Analysengerät nach einem der Ansprüche 5 bis 7, dadurch gekennzeichnet, daß eine Aufnahmevorrichtung (106) Leseeinrichtungen für Belegungstabellen aufweist und Aufzeichnungs- und Sendespuren (113 bis 116) einer Steuergruppe (112) zur Aufnahme von Signalen aus der Aufnahmevorrichtung vorgesehen sind und die Aufzeichnungs- und Sendespuren (113 bis 116) für mechanische Wiedergabe in Form von Lochbändern, für elektronische Wiedergabe im Zusammenhang mit Magnetbändern etc. ausgeführt sind und jeder Aufzeichnungs- und Sendespur ein Empfänger für Signale aus der Aufnahmevorrichtung (106) und ein Sender zur Weitergabe von Signalen in eine Taktsteuerung (124) nachgeordnet sind, welche Taktsteuerung eine Schaltungseinrichtung ist, die die aufgenommenen Signale auswertet und an verschiedene Ausgänge zu Aggregaten (125 bis 130) für den Antrieb des Gerätes ausgibt.

9. Analysengerät nach einem der Ansprüche 5 bis 8, dadurch gekennzeichnet, daß im Reaktionsrotor (1) ein Gehäuse (29) mit Arbeitsvorrichtungen für Spülen, Füllen, Absaugen und Trocknen angeordnet ist.

10. Analysengerät nach einem der Ansprüche 6 bis 9,dadurch gekennzeichnet, daß eine Antriebsteuerung für den Reaktionsrotor (1) mit Arbeitsschritten verschiedener Dauer in einem Analysentakt vorgesehen ist.

## Claims

1. Process for analysing liquid samples in test tubes which are located in an endless series in a rotatable test carousel or another support on a fixed track, which can be moved in steps in which stop positions are provided between the movement steps in a first direction and stationary working positions in conjunction with workstations are provided around the periphery of the carousel in the region of each stop position, the workstations comprising at least one optical measuring instrument, at least two dispensing and removal devices for the sample and reagents and one flushing device and/or test tube dispensing and/or removal device and mixing devices as well as at least one transfer device for the dispensing and removal devices, where the test carousel can be moved in reciprocal fashion from each stop position in accordance with a movement pattern of fixed total duration and the movement pattern is repeated in continuous sequence as an analytical cycle and at the end of the analytical cycle the test carousel has been advanced by one peripheral step in the first direction of rotation and that, furthermore, the same analytical cycle is then repeated for the directly adjacent test tube in an opposite second direction of roation, characterized in that the test carousel is moved within each analytical cycle via the shortest route by changing over the sense of rotation from one working position to the next and in each analytical cycle the times in which an operation is or can be conducted in certain working positions of the test carousel are fixed (sections of fixed sequences), and further that from the periphery of the test carousel a number of successively configured test tubes are grouped together for the purposes of the control system to form a block in order to convey them to different working positions, and that in each analytical cycle at least one time of fixed duration is provided at a certain period as an optional time window for at least one operation - section for a flexible sequence - in which according to the given analytical sequence the carousel can be moved such that optionally a certain test tube can be moved from the specified test tube block to a certain working position and further that in this window which is available for a particular operation several working stages can be carried out according to the analytical sequence set.

2. Process according to claim 1, characterized in that the advancing of the test carousel via the shortest route to the next working position is carried out in the form of a continuous movement.

3. Process according to claim 1 or 2, characterized in that the minimum of one transfer device carries out a plurality of operations, viz. dispensing, withdrawing and/or transfer to, from and/or between different test tubes or vessels, at selected stop positions in relation to corresponding working positions.

4. Process according to any of claims 1 to 3, characterized by a working position with a transfer device for the transfer of a sample mixed with at least one reagent into an additional processing unit outside the workstations on the test carousel.

5. Analytical instrument to conduct the process according to any of claims 1 to 4 comprising
a test carousel (1) as the driving support for test tubes uniformly spaced on the periphery of the test carousel,
a drive unit to drive this test carousel,
a sample queueing system (2), particularly in the form of a sample chain (36),
a reagent unit (3) with a plurality of reagents in accessible vessels,
a transfer device (4) which is suspended above the test carousel, sample queueing system and reagent unit and can be used if required to withdraw samples and/or reagents and to transfer them to or remove them from the test tubes of the test carousel,
an optical measuring device (30) on the test carousel, tempering devices on the test carousel,
workstations such as mixing unit (31, 32) and cleaning device (29) for test tubes on the periphery of the test carousel,
guide and control means, which move the test carousel in reciprocal fashion from each stop position in accordance with a movement pattern of fixed total duration and repeat the movement pattern in continuous sequence as an analytical cycle and advance the test carousel at the end of the analytical cycle by one peripheral step in the first direction of rotation, and, furthermore, repeat the same analytical cycle for the directly adjacent test tube in the opposite second direction of rotation, characterized in that the test carousel (1) can move between various stop positions to any workstation via the shortest route by means of changing the direction of rotation of the drive unit, and for the rotation of the test carousel, sections of fixed sequences are provided and at least one section for a flexible sequence,
further, in the fixed sequence sections the steps of dispensing a first reagent into a test tube for reagent measurement, dispensing and mixing the sample in a test tube, cleaning at least one test tube and also extraction from a test tube can be carried out,
and, further, form the periphery of the test carousel a number of successively configured test tubes are grouped together by the control means to form a block in order to convey them to different working positions,
further a measurement is provided to measure a first group of test tubes and a second group of test tubes, forming a block of test tubes,
and a transport of test tubes to the optical measuring system (30) for re-measurement and the conducting of a blank test is provided,
and a further transport of a test tube to the sample dispensing and mixing station (48, 31) is provided, and that at least one section for a flexible sequence is provided during at least one supplementary activity time (70) in one rotational position of the test carousel which can be used optionally in order to carry out or introduce in this activity time for a test tube the dispensing of a reagent, reagent and/or sample withdrawal and/or transfer, if necessary into another test tube.

6. Analytical instrument according to claim 5, characterized in that analytical cycles of a given duration are provided in each stop position in which different test tubes in different workstations are subjected to treatment where within the analysis cycle, depending on the workstation, working processes of differing duration are provided.

7. Analytical instrument according to claim 5 or 6, characterized in that external modules (50) in addition to the directly connected workstations are assigned to the test carousel (50) as processing units, and at least one test solution transfer device (22, 68) is provided for transfer to an external module.

8. Analytical instrument according to any of claims 5 to 7, characterized in that
a recording device (106) is provided with
reading units for availability tables and
recording and transmitting tracks (113 - 166) of a control group (112) to record signals from the recording device are provided and where the recording and transmitting tracks (113 - 166) are executed in the form of punched tapes for mechanical reproduction and in connection with magnetic tapes etc for electronic reproduction,
further a receiver for signals from the recording device and a transmitter for transmission of signals to a cycle control system (124) is assigned to each recording and transmission track,
the cycle control system (124) is in the form of a switch device which evaluates the recorded signals and relays them to different outputs (125 - 130) to units for the instrument drive.

9. Analytical instrument according to any of claim 5 to 8, characterized in that a housing (29) is located on the test carousel (1) with workstations for flushing, filling, extracting and drying accommodated in the housing.

10. Analytical instrument according to any of claims 6 to 9, characterized in that a drive control system is provided for the test carousel (1) with working stages of varying duration in an analytical cycle.

## Revendications

1. Procédé pour analyser des échantillons liquides dans des cuvettes de réaction, qui sont disposées selon une suite sans fin dans un rotor de réaction rotatif ou sur un autre support comportant une voie de déplacement fixe, ce rotor ou ce support étant déplaçable pas-à-pas,
procédé selon lequel il est prévu des positions d'arrêt entre les pas de déplacement dans une première direction, et, sur la périphérie du rotor, il est prévu, au niveau des positions d'arrêt respectives, des postes fixes de travail associés à des dispositifs de travail qui comprennent au moins un dispositif optique de de mesure, au moins deux dispositifs d'addition et de prélèvement pour des échantillons et des réactifs et un dispositif de lavage et/ou d'addition et/ou de prélèvement dans des cuvettes, et des dispositifs de mélange ainsi qu'au moins un dispositif de transfert pour les dispositifs d'addition et de prélèvement,
et selon lequel le rotor de réaction peut être déplacé en va-et-vient à partir de chaque position d'arrêt conformément à un programme de déplacement d'une durée globale fixe, le programme de déplacement est répété de façon continue en tant que cycle d'analyse, à la fin du cycle d'analyse, le rotor de réaction avance d'un pas de déplacement circonférentiel dans le premier sens de rotation, et ensuite le même cycle d'analyse est répété pour la cuvette de réaction qui est directement adjacente dans le second sens de rotation, opposé au premier,
caractérisé en ce que :
au cours de chaque cycle d'analyse, le rotor de réaction est déplacé selon le trajet chaque fois le plus court, par commutation du sens de rotation, d'un poste de travail au poste immédiatement suivant,
au cours de chaque cycle d'analyse, les durées pendant lesquelles une fonction est ou peut être exercée lorsque le rotor de réaction est dans des postes de travail déterminés, sont fixées (intervalles de séquences rigides)
et en outre, à partir de la circonférence du rotor de réaction, un certain nombre de cuvettes de réaction disposées les unes derrière les autres sont réunies, en fonction d'une commande, de façon à constituer un bloc pour venir dans différentes positions de travail pendant un cycle d'analyse,
et en ce que, à l'intérieur de chaque cycle d'analyse, au moins un temps d'activité de durée fixée est prévu à un instant déterminé pour constituer un créneau temporel - intervalle pour une séquence souple - optionnel pour au moins une fonction, créneau dans lequel le rotor de réaction peut être déplacé en fonction d'une succession prédéterminée d'analyses de telle sorte qu'au choix une cuvette de réaction déterminée dudit bloc à cuvettes pour être amenée dans une position déterminée de travail et qu'en outre également plusieurs étapes de travail peuvent être exécutées dans ce créneau optionnel pour une fonction, en fonction de la séquence d'analyses introduite.

2. Procédé selon la revendication 1, caractérisé en ce que la poursuite du déplacement du rotor de réaction est exécutée selon le trajet le plus court jusqu'au poste de travail suivant, sous la forme d'un déplacement continu.

3. Procédé selon la revendication 1 ou 2, caractérisé en ce que le ou les dispositifs de transfert exécutent, dans des positions d'arrêt sélectionnées en rapport avec des positions de travail correspondantes, plusieurs fonctions dans le sens d'une addition, d'un prélèvement et/ou d'un transfert à, de, et/ou entre différentes cuvettes ou récipients de réaction.

4. Procédé selon l'une des revendications 1 à 3, caractérisé par un poste de travail comportant un dispositif de transfert pour le transfert d'échantillon pourvus d'au moins un réactif, dans un dispositif supplémentaire de traitement situé à l'extérieur des dispositifs de travail prévus sur le rotor de réaction.

5. Appareil d'analyse pour la mise en oeuvre du procédé selon l'une des revendications 1 à 4, comportant :
- un rotor de réaction (1) utilisé comme support d'entraînement pour des cuvettes de réaction réparties de façon équidistante sur la circonférence de ce rotor de réaction,
- un dispositif d'entraînement pour entraîner ce rotor de réaction,
- un dispositif (2) de préparation d'échantillons, notamment sous la forme d'une chaîne à échantillons (36),
- une unité à réactifs (3) comportant une multiplicité de réactifs logés dans des récipients accessibles,
- un dispositif de transfert (4), qui recouvre le rotor de réaction, le dispositif de préparation des échantillons et l'unité à réactifs, et qui peut être utilisé au choix pour recevoir des échantillons et/ou des réactifs et les transférer ou les prélever dans les cuvettes de réaction du rotor,
- un dispositif optique de mesure (30) monté sur le rotor de réaction,
- des dispositifs de mise en température montés sur le rotor de réaction,
- des dispositifs de travail, tels qu'un dispositif mélangeur (31,32), un dispositif de nettoyage (29) pour des cuvettes de réaction, disposés sur la circonférence du rotor,
- des dispositifs de guidage et de commande qui déplacent en va-et-vient le rotor de réaction à partir de chaque position d'arrêt, conformément à un programme de déplacement d'une durée globale fixe, répètent le programme de déplacement en permanence pour constituer un cycle d'analyse, déplacent d'un pas de déplacement circonférentiel le rotor de réaction dans le premier sens de rotation, à la fin du cycle d'analyse, et répètent ensuite le même cycle d'analyse pour les cuvettes de réaction directement adjacentes dans le second sens de rotation, opposé au premier,
caractérisé en ce que le rotor de réaction (1) peut être amené dans n'importe quel poste de travail selon le trajet le plus court par commutation du sens de rotation du dispositif d'entraînement entre des positions d'arrêt différentes,
qu'il est prévu, pour la rotation du rotor de réaction, des intervalles de temps de séquences rigides et au moins un intervalle de temps pour une séquence souple,
étant entendu que les opérations d'addition d'un premier réactif dans une cuvette de réaction, de mesure du réactif, d'addition et de mélange d'un échantillon dans une cuvette de réaction, de nettoyage d'au moins une cuvette de réaction, et aussi d'une aspiration à partir d'une cuvette de réaction, pouvant être exécutées pendant les intervalles de la séquence rigide,
qu'en outre, pendant le cycle d'analyse, un certain nombre de cuvettes de réaction disposées les unes derrière les autres sont rassemblées par le dispositif de commande, à partir de la circonférence du rotor de réaction, en formant un bloc, pour être amenées dans différents postes de travail,
et qu'il est prévu une mesure d'un premier groupe de cuvettes de réaction et d'un second groupe de cuvettes de réaction, qui forment un bloc et un transport de cuvettes de réaction jusqu'au dispositif optique de mesure (30) pour une mesure ultérieure, et ensuite la mesure d'une valeur à vide des cuvettes de réaction, ainsi qu'un autre transport d'une cuvette de réaction au poste d'addition et de mélange d'échantillons (48,31),
et en ce qu'au moins un intervalle pour une séquence souple d'une durée égale au moins à un temps d'activité fixé (70) est prévu dans une position en rotation du rotor de réaction et peut être utilisé au choix pour exécuter et déclencher, pendant ce temps d'activité, pour une cuvette de réaction, une addition d'un réactif, un prélèvement et/ou un transfert d'un réactif et/ou d'un échantillon, éventuellement dans une autre cuvette de réaction.

6. Appareil d'analyse selon la revendication 5, caractérisé en ce que dans chaque position d'arrêt, il est prévu des cycles de travail de durée déterminée, pendant lesquels différentes cuvettes de réaction sont soumises à un traitement dans différentes postes de travail, des opérations de travail de durées différentes étant prévues pendant le cycle de travail, en fonction du poste de travail.

7. Appareil d'analyse selon la revendication 5 ou 6, caractérisé en ce qu'en dehors de dispositifs de travail associés directement, des modules extérieurs (50) sont associés, en tant que dispositifs de traitement, au rotor de réaction (1) et qu'il est prévu au moins un dispositif (22,68) de transfert d'une solution de mesure pour exécuter le transfert dans un module extérieur.

8. Appareil d'analyse selon l'une des revendications 5 à 7, caractérisé en ce qu'un dispositif de réception (106) comporte des dispositifs de lecture pour des tableaux d'identification et qu'il est prévu des pistes d'enregistrement et d'émission (113 à 116) d'une unité de commande (112) pour recevoir des signaux provenant du dispositif de réception,
que les pistes d'enregistrement et d'émission (113 à 116) sont conçues pour la reproduction mécanique sous la forme de bandes perforées, pour la reproduction électronique en association avec des bandes magnétiques, etc,
et qu'en aval de chaque piste d'enregistrement et d'émission sont installés un récepteur pour des signaux provenant du dispositif de réception (106) et un émetteur pour la retransmission de signaux à une unité de commande de cadence (124), qui est un dispositif de commutation, qui exploite les signaux reçus et les délivre, sur différentes sorties, à des mécanismes (125 à 130) servant à faire fonctionner l'appareil.

9. Appareil d' analyse selon l'une des revendications 5 à 8, caractérisé en ce que, dans le rotor de réaction (1), est disposé un boîtier (29) équipé de dispositifs de travail pour le lavage, le remplissage, l'aspiration et le séchage.

10. Appareil d'analyse selon l'une des revendications 6 à 9, caractérisé en ce qu'il est prévu une unité de commande du rotor de réaction (1) selon des pas de travail de durées différentes dans un cycle d'analyse.
